# EUROPEAN PATENT SPECIFICATION

(11) **EP 2 570 462 B1**
(45) Date of publication and mention of the grant of the patent: **03.05.2017**
(21) Application number: 12184435.1
(22) Date of filing: 14.09.2012
(51) Int. Cl.: H01M 4/00, B82Y 30/00, C09D 11/52, C09D 11/037, C09D 11/033

(54) **METHOD OF PRODUCING GRAPHENE LAYERS AND PASTE COMPRISING GRAPHENE NANOPLATELETS**
METHODE ZU HERSTELLUNG VON GRAPHENESCHICHTEN UND GRAPHENENANOTEILCHHEN ENTHALTTENDE PASTE.
MÉTHODE POUR LA PRODUCTION D' UNE COUCHE DE GRAPHENE ET PÂTE COMPRENANT LE PLAQUETTES DE GRAPHENE.

(30) Priority: 19.09.2011 PL 39637311
(43) Date of publication of application: 20.03.2013
(73) Proprietor: Instytut Technologii Materialów Elektronicznych, 01-919 Warszawa (PL)
(72) Inventor: Jakubowska, Ma?gorzata, 02-541 Warszawa (PL); M?o?niak, Anna, 01-737 Warszawa (PL); S?oma, Marcin, 01-240 Warszawa (PL)
(74) Representative: Sielewiesiuk, Jakub

(56) References cited:
- WO-A1-2010/102759
- CN-B- 101 937 737
- US-A1- 2007 062 411
- US-A1- 2011 086 206

## Description

The object of the invention is a method of producing graphene layers and a paste comprising graphene nanoplatelets and an organic vehicle. The invention is employed in electronics and microelectronics where it can be used to produce:
- transparent conductive layers which form transparent electrodes in display devices,
- electrodes in lithium-ion batteries,
- electrodes with developed active surface in electrolytic capacitors, including supercapacitors,
- field-effect transistors,
- chemical sensors and biological substances featuring high sensitivity, selectivity and speed of reaction, including gas detectors,
- resistive layers for electronics,
- resistive thermal and electromechanical sensors.

In the prior art, there are known research works referring to various properties of volumetric mixtures of graphene and polymethyl methacrylate.

The Chinese scientists examined the ways of introducing conductive fillers into a polymer matrix. (Guohua Chen, Wengui Weng, Dajun Wu, Cuiling Wu, PMMA/graphite nanosheets composite and its conducting properties, European Polymer Journal 39 (2003) 2329-2335). The graphene nanoplatelets were produced by sonification of expanded graphite in a water-alcohol solution, then the mixture of 0.5-12% by weight of nanoplatelets with methyl methacrylate were subjected to the impact of ultrasounds for 20 min. in the temp. of 60°C with addition of 0.5% by weight of benzoyl peroxide which caused polymerisation i*n situ.* The nanocomposite so produced, dispersed in chloroform, CHCl₃, was applied on substrates by the technique of pouring the dispersion onto glass plates. It was examined that the percolation threshold was about 0.31% by volume, (3 % by volume for a composite with graphite).

Wenge Zheng i Shing-Chumg Wong were also producing composite of polymethyl methacrylate and expanded graphite (Wenge Zheng, Shing-Chung Wong, Electrical conductivity and dielectric properties of PMMA, Composites Science and Technology 63 (2003) 225-235). Beginning with graphite platelets, they dried them and then treated them for 24 hours with concentrated acids: sulphuric and nitric in 4:1 ratio. Having washed them with water and thoroughly dried, they carried out the expanding process in the temperature of 900°C for 15 s. The filler so prepared was added in various proportions to the polymethyl methacrylate solution in chloroform and mixed by means of ultrasounds. After vaporisation of chloroform, the composite was dried and 500 µm thick mouldings were prepared to examine conductivity. The percolation threshold for the composite so produced was found to be very low - 1% by weight whereas for an analogous arrangement with graphite it was 3.5% by weight.

Silvia Villar-Rodil with collaborators (Silvia Villar-Rodil, Juan. I. Paredes, Amelia Marti'nez-Alonso, Juan. M. D. Tascon, Preparation of graphene dispersions and graphene-polymer composites in organic media, J. Mater. Chem., 2009, 19, 3591-3593), while studying the possibilities of producing stable graphite dispersions in organic solvents (DMF, NMP), which was successfully carried out, went further by producing polymer composites: graphene with polyacrylonitrile in DMF and graphene with polymethyl methacrylate in NMP. It was observed that 1% addition of graphene improves the thermal stability of PMMA, increasing resistance by 10°C.

Researchers from India were introducing small amounts (0-0.6%) of oligolayered graphene functionalized with acids to polyvinyl alcohol and (0-0.6%) oligolayered graphene functionalized with amine to PMMA (Barun Das, K Eswar Prasad, U Ramamurty and C N R Rao, Nano-indentation studies on polymer matrix composites reinforced by few-layer grapheme, Nanotechnology 20 (2009) 125705). Improvement of the mechanical properties of the polymer; significant increase of the modulus of elasticity and hardness were observed.

Similar results were obtained by Ramanathan and collaborators (T. Ramanathan et al., Functionalized graphene sheets for polymer nanocomposites, Nature Nanotechnology, Vol.3, 2008, p. 327). In case of their research, PMMA was filled with SWCNT, expanded graphite and functionalized (possibly oxidised) graphene nanoplatelets (1-5%). In the latter case, the following properties were improved for the 1% filler: the Young's modulus, temperatures of transformation, strength and thermal degradation.

From the American patent application no US 2011/0159372 A1, a paste is known comprising electroactive graphene particles dispersed in a polymer solution.

From the international patent application no WO 2009/143405 A2, a method is known of producing graphene layers and nanoparticle composites comprising such layers, according to which the graphene layers dissolve in aqueous, non-aqueous or semi-aqueous solutions.

From the international patent application no WO 2009/099707 A1, an electrically conductive ink is known, comprising layers of graphene and a binder which is a solution of polyethylene glycol (PEO) in ethanol and deionised water. The ink disclosed in the publication WO 2009/099707 A1 is printed electro-hydrodynamically (it is a kind of a stream print) on a substrate of glass.

From the European patent application no EP 2361278 A1, an agent is known which reduces the flammability of materials in the form of a polymer composition, comprising graphene nanoparticles and an organic polymer (e.g. polyolefins or PVC).

The Chinese patent application no CN 101864005 A discloses a method of producing a composite consisting of a polymer and graphene, according to which the graphene powder is produced *in situ* and dispersed in said polymer.

Another method of producing a composite comprising a polymer and graphene has been disclosed in the publication WO 2010/045887 A1. According to this method, graphene is dispersed in a first solvent whereas a polymer is dispersed in a second solvent, after which both substances are mixed in order to produce said composite.

The international publication no WO 2011/086391 A1 discloses graphene on a solid substrate or graphene in a liquid carrier. On the other hand, the publication no WO 2011/078462 A2 discloses a graphene suspension in an ion liquid.

On the other hand, the Korean patent application no KR 20100108868 A discloses a conductive polymer nanocomposite, comprising a polymer resin, graphene and carbon nanotubes. Another conductive composite comprising graphene powder, graphite oxide and a polymer has been disclosed in the Korean invention application no KR 20100031981 A.

The American patent application no US 2010/0000441 A1 describes a conductive ink based on graphene nanoplatelets. According to the disclosure of this application, the conductive ink comprises graphene nanoplatelets in a non-oxidised or oxidised form and a liquid medium in which these platelets are suspended. The ink disclosed therein can additionally comprise other ingredients, such as a binder, surfactants and fillers - for example, carbon nanotubes.

According to the disclosure of the publication US 2010/0000441 A1, production of the conductive ink requires dispersing oxidised or non-oxidised particles of graphene in a liquid medium, e.g. such as water, alcohol or acetone. The mixture so produced is subjected to the impact of ultrasounds in the temperature between 0°C and 100°C. In one of the later stages, the solution of graphene nanoparticles is mixed with a conductive polymer being a mixture of poly(3,4-ethylene-1,4-dioxythiophene) and polystyrene sulfonate, in short: PEDOT-PSS, in order to produce the ink. The ink so produced is overprinted on the substrate by means of an ordinary ink jet printer.

Although, the jet printing methods allow producing precise, small width pathways used in electronics, such method is not suitable for quick coating of large surfaces which is required in other electronic applications, e.g. in optoelectronics, photovoltaics, in electrochemical sensors. Moreover, according to the disclosure of the application US2010/0000441 A1, the production of conductive pathways requires them to be adequately thick which, in case of the jet printing, makes it necessary to overprint the same pathways multiple times on the same substrate. Finally, all mixtures or suspensions or graphene in a liquid medium, presented in said publications, including inks known from the application US2010/0000441 A1, are not at all suitable for applying by the screen printing method, due to improper rheological properties of the liquid medium.

Therefore, the object of the present invention is to provide a method of producing graphene layers on a substrate, suitable for producing both resistive as well as conductive layers, and also allowing to produce layers with a very precise topography of a specific pattern on the substrate surface as well as to quickly coat large surfaces of the substrate with graphene layers.

Another object of the present invention is to provide a paste comprising graphene nanoplatelets and an organic vehicle, suitable for being applied in said method.

The inventors of the present invention unexpectedly discovered that not every organic resin solution, known from being used in other pastes for the screen printing technique, is suitable for producing the paste and forming graphene layers on a substrate according to the present invention. For example, the inventors examined solutions of nitrocellulose, ethyl cellulose, polycarbonate, polystyrene and polymethyl methacrylate in a composition of organic solvents. Graphene layers based on nitrocellulose were non-conductive. On the other hand, other resins, such as ethyl cellulose or polystyrene were not entirely removed during annealing process, and their remains in the layer deteriorated the electric properties. The inventors found that the pastes produced with the use of these vehicles do not allow producing resistive or conductive graphene layers by the method according to the invention.

According to the invention, a method of producing graphene layers on a substrate, characterised in that it comprises the following steps:
a) applying a paste comprising from 0.5% by weight up to 15% by weight of graphene nanoplatelets mixed with an organic vehicle in the form of a polymethyl methacrylate (PMMA) solution in butyl carbitol acetate with the concentration from 2% by weight to 10% by weight or in the form of a polycarbonate (PC) solution in butyl carbitol acetate with the concentration from 5% by weight to 12% by weight on said substrate by the screen printing method,
b) annealing of the paste so applied on the substrate in the temperature from 100°C to 500°C.

Preferably, the content of the nanoplatelets in said paste is 2% by weight to 8% by weight, more preferably from 5% by weight to 8% by weight.

Preferably, said paste comprises an organic vehicle in the form of a polymethyl methacrylate (PMMA) solution in butyl carbitol acetate with the concentration from 5% by weight to 10% by weight, preferably about 8% by weight.

Preferably, said paste comprises an organic vehicle in the form of a polycarbonate (PC) solution in butyl carbitol acetate with the concentration of about 10% by weight.

Preferably, said paste comprises additives which improve dispersion, selected from a group comprising agents which reduce surface tension, facilitate de-agglomeration, prevent re-agglomeration and sedimentation of the filler and additives improving the rheology of the paste.

Preferably, said annealing stage is carried out in the temperature of 120°C, 200°C, 250°C, 300°C, 350°C or 400°C.

Preferably, said annealing stage is carried out for 15 to 90 minutes, more preferably for 30 to 90 minutes and most preferably for 45 to 60 minutes.

Preferably, said substrate is selected from a group comprising: glass, ceramics, metals, plastics, low- and high-temperature polymer films, fabrics, paper.

The invention also includes a paste comprising graphene nanoplatelets and an organic vehicle, characterised in that it comprises:
a) from 0.5% by weight to 15% by weight, more preferably from 2% by weight to 8% by weight and most preferably from 5% by weight to 8% by weight of graphene nanoplatelets,
b) an organic vehicle in the form of a polymethyl methacrylate (PMMA) solution in butyl carbitol acetate with the concentration from 2% by weight to 10% by weight, more preferably from 5% by weight to 10% by weight and most preferably of about 8% by weight, or a vehicle in the form of a polycarbonate (PC) solution in butyl carbitol acetate with the concentration from 5% by weight to 12% by weight, preferably about 10% by weight.
c) or possibly additives which improve dispersion, selected from a group comprising agents which reduce surface tension, facilitate de-agglomeration, prevent re-agglomeration and sedimentation of the filler and additives improving the rheology of the paste.

The method of producing graphene layers on a substrate according to the present invention offers several advantages. Firstly, thanks to the possible low annealing temperature (100°C - 400°C), it is suitable for producing graphene layers on surfaces of temperature-sensitive substrates such as for example aluminium, plastic materials (films), fabrics, paper. Secondly, while adjusting the composition of the paste and/or annealing temperature, according to the present invention, is possible to produce pathways/layers with required electric properties, particularly resistive layers or conductive layers. The method according to the invention is relatively quick and inexpensive. Using the screen printing method as the paste application method offers, on one hand, the possibility to quickly coat large surfaces which is required in case of said applications, such as e.g. optoelectronics, photovoltaics, electrochemical sensors, and, on the other hand, high selectivity of coating with graphene (practically, a system of pathways of any complexity can be overprinted). These advantages are not available by the methods, known in the prior art, of applying liquid mixtures comprising graphene ("graphene inks") on a substrate by means of ink jet printers. The screen printing method - as an inexpensive and commonly available technique - can be used without excessive expenditures even in small and medium-size enterprises.

The invention will now be presented more closely in preferred embodiments, with references to the attached drawings on which:

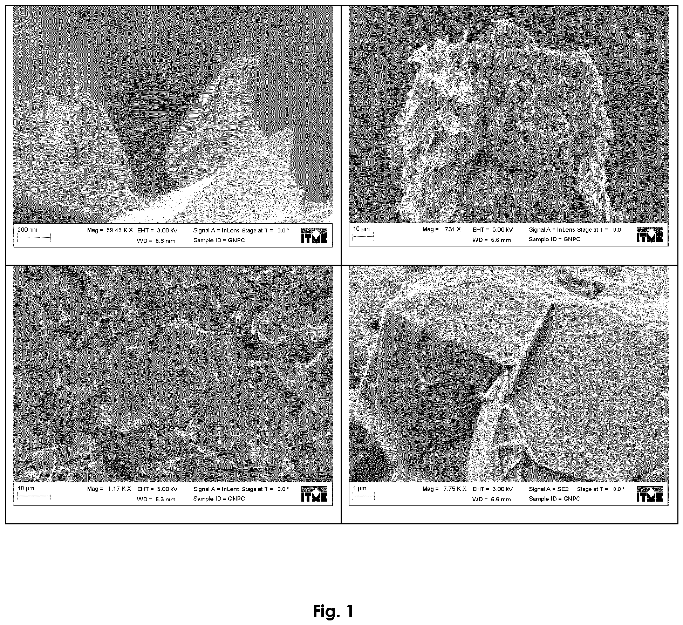

- Fig. 1: (a, b, c, d) presents microscope photographs of graphene nanoplatelets (GNP) used on the described research,
- fig. 2: presents a test pattern for examining graphene layers,
- fig. 3: presents a microscope photograph of a graphene layer on PET film cured in the temperature of 120°C,
- fig. 4: (a, b) presents a graphene layer on a glass substrate, annealed in the temperature of 400°C ; A- magnification 1000 times, B - magnification 20000 times,
- fig. 5: presents a profile of a graphene layer on a glass substrate, annealed in the temperature of 400°C,
- fig. 6: presents a graph illustrating the dependence of the sheet resistivity of graphene layers overprinted on glass substrates from the annealing temperature whereas
- fig. 7: presents a graph illustrating the dependence of the sheet resistivity of graphene layers overprinted on glass substrates from the GNPC content in various annealing temperatures.

### Detailed Description of Invention

### 1. Materials Used:

### 1.1. Graphene purchased from Cheap Tubes, featuring the following characteristics:

### GNP A graphene nanoplatelets

| | |
|---|---|
| Purity | 99% by weight |
| Dimension | 2µm |
| Average thickness | <3nm |
| Class | 4 |
| Specific surface area | 700m²/g |
| Method of production | plasma exfoliation |

The selected material comprises platelets composed of 1÷3 layers of graphene.

### GNP C graphene nanoplatelets

| | |
|---|---|
| Purity | 97% by weight |
| Size | 15µm |
| Average thickness | 10nm |
| Class | 2 |
| Specific surface area | 100m²/g |
| Method of production | chemical |

The selected material comprises platelets composed of 20÷25 layers of graphene.

Additional data from the website of Cheap Tubes, a graphene producer - for 2 and 4 class GNPs:

| | |
|---|---|
| Density: | ∼2.0g/cm³ |
| Chemical composition: | Graphene |
| Resistivity | ∼ 50 x 10⁻⁶Ω cm |
| Thermal conductivity | 3000W/m K |
| Young's modulus: | ∼1.0 TPa |
| Tensile strength: | ∼10-20GPa |

Graphene nanoplatelets, GNPs, are produced mostly in a chemical process, beginning with a natural raw material - graphite, which is inexpensive and easily available. The first stage of producing graphene in a chemical process is oxidation of graphene by the most popular method - the Hummers method. The Hummers and Offeman method, described in 1957, consists in oxidising graphite by means of sulphuric acid, H₂SO₄, sodium nitrate, NaNO₃, and potassium permanganate, KMnO₄, is still commonly used along with its numerous modifications. As a result of this process, graphene oxide is produced which is subjected to exfoliation and then the second stage - chemical reduction. The reduction is most often carried out with the use of hydrazine or its derivatives.

Dwg 1 (a-d) presents the microscope photographs of the GNP used in the described research.

### 1.2. Organic Vehicle

Organic vehicles which were solutions of polymethyl methacrylate (PMMA) in butyl carbitol acetate with the concentration of 5-10% by weight were tested. The solution with the concentration of 8% by weight was recognised as the best for screen printing pastes. Tests with 5 - 10% concentrations were also carried out. PMMA by Sigma Aldrich, featuring M_{w} 350,000 was used which was solved in butyl carbitol acetate in a hot process while being stirred intensively.

The test of the vehicle, consisting in annealing it in the air atmosphere in the temperature of 300°C, showed that the weight loss was 99.94% which meant that, in these conditions, nearly all polymer is oxidised and removed from the layer.

Also, organic vehicles which were solutions of polycarbonate (PC) in butyl carbitol acetate with the concentration of 5-12% by weight were tested. The solution with the concentration of 10% by weight was recognised as the best for screen printing pastes. Tests with 5 - 10% concentrations were also carried out. PC Makrolon by Bayer was used which was solved in butyl carbitol acetate in a hot process while being stirred intensively.

The test of the vehicle, consisting in annealing it in the air atmosphere in the temperature of 300°C, showed that the weight loss was 99.56% which meant that, in these conditions, nearly the entire polymer is oxidised and removed from the layer.

### 2. Production of Paste

The production of the paste consists in mixing the following weighed ingredients in proper ratio in a mortar, i.e.
- graphene nanoplatelets,
- organic vehicle,
- possibly, additives which improve dispersion by reducing surface tension, facilitating de-agglomeration, preventing re-agglomeration and sedimentation of the filler and additives improving the rheology of the paste; such additives are available in the market and known to experts.

The mixture is ground for about 30 minutes. Then, the paste is rolled on a triple roll mill for homogenising pastes.

The research comprised pasted with the 0.5 %-5% graphene content by weight.

### 3. Application of Paste

Graphene paste can be applied on various substrates: ceramic, glass, heat-resistant films (the KAPTON type) low temperature films (the PET, PEN type), fabrics, paper, etc. First, electrodes made of silver paste are applied by the screen printing technique and hardened by heat treatment. The graphene paste was applied by the screen printing method. Polyester screen with 200 mesh density and an adequate test pattern was used. The applied layer underwent drying in the air in the ambient interior temperature (the so-called levelling stage) for 10 minutes. The next stage was hardening of the applied layer in a dryer, in the temperature of 120°C for 1 hour. After hardening, resistances of particular elements of the test pattern were tested and the average value of the R/□ sheet resistivity was calculated.

### 4. Annealing of Graphene Layers

The polymer (polymethyl methacrylate, PMMA) contained in the layer exhibits insulation properties. To improve the conductivity of the graphene layer, it was heated in an air atmosphere in order to remove the polymer. Annealing was carried in an oven-type furnace for 1 h. While annealing in the oven-type furnace in the air atmosphere, the time to the maximum temperature was set each time at 30 minutes, the holdover time - at 1 hour.

Impact of the annealing:
The GNP C 2% / PMMA 10% sample, after hardening, exhibits the sheet resistivity at approx. 20 kΩ/□;
the GNP C 2% / PMMA 10% sample, after hardening and annealing in the temp. of 300°C, exhibits the sheet resistivity at approx. 5 kΩ/□;
the GNP C 2% / PMMA 10% sample, after additional annealing in the temp. of 400°C, exhibits the sheet resistivity at approx. 0.5-2 kΩ/□;

Further tests were carried out, using the selected organic vehicle with the concentration of 8% by weight. PMMA. Reducing the PMMA content of the vehicle from 10% to 8% made the sheet resistivity drop from approx. 20 kΩ/□ down to several kilo ohms per square.

The following samples were analysed:
1. GNP C PMMA 8%/0.5%,
2. GNP C PMMA 8%/1%,
3. GNP C PMMA 8%/2%,
4. GNP C PMMA 8%/3%,
5. GNP C PMMA 8%/4%,
6. GNP C PMMA 8%/5%.

Resistivity was measured with the use of silver electrodes applied by the screen printing technique from the P- 124 paste (ITME), sintered in the temperature of 550°C. The stage of annealing the overprinted layers by the screen printing technique was performed in various temperatures: 200°C, 250°C, 300°C, 350°C, 400°C.

The measurement results are tabulated below.

| **Temperature of the annealing:** | **Sample symbol** | **R_{average}/□, kΩ/□** |
|---|---|---|
| 120°C | **GNP C PMMA 8%/2%** | 11.900 |
| 200°C | | 5.45 |
| 250°C | | 6.100 |
| 300°C | | 0.593 |
| 350°C | | 1.026 |
| 400°C | | 1.083 |
| 120°C | **GNP C PMMA 8%/3%** | 0.734 |
| 200°C | | 0.971 |
| 250°C | | 0.229 |
| 300°C | | 0.192 |
| 350°C | | 0.108 |
| 400°C | | 0.121 |
| 120°C | **GNP C PMMA 8%/4%** | 0.171 |
| 200°C | | 0.148 |
| 250°C | | 0.116 |
| 300°C | | 0.086 |
| 350°C | | 0.048 |
| 400°C | | 0.034 |
| 120°C | **GNP C PMMA 8%/5%** | 0.106 |
| 200°C | | 0.102 |
| 250°C | | 0.084 |
| 300°C | | 0.040 |
| 350°C | | 0.028 |
| 400°C | | 0.030 |

### Preferred Embodiments of Invention

### Example 1

According to the description provided before, a paste was produced, comprising 2% of graphene nanoplatelets in the 8% PMMA solution (M_{W} 350 000) in butyl carbitol acetate. Such paste features low viscosity but it exhibits very good wettability of both used substrates: soda-lime glass as well as polyester film (PET). The printed paste easily wetted surface and covered the substrate.

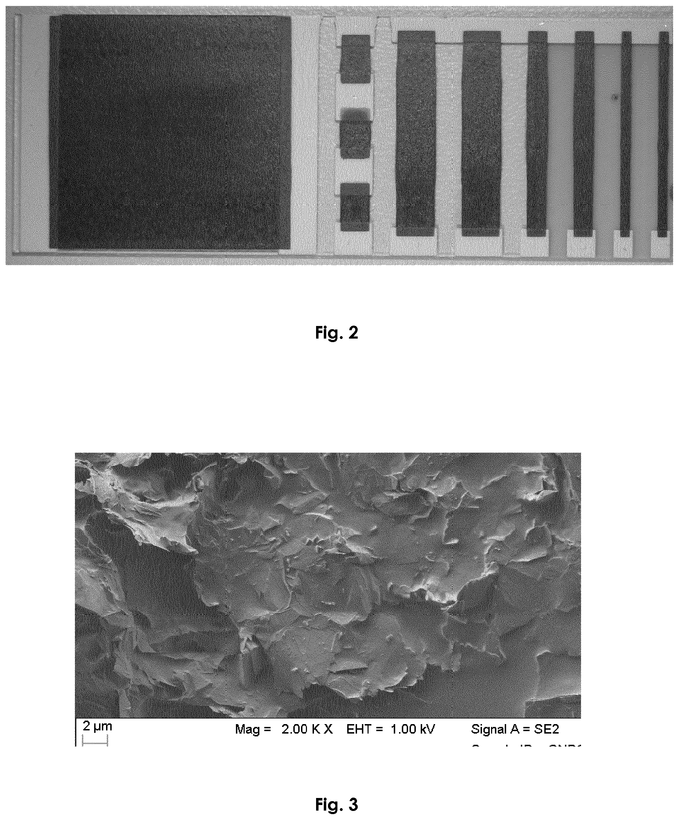

The paste was overprinted on glass substrates and polyester film, using nylon screen with the 200 mesh density. The test pattern is presented in fig. 2. Silver electrodes have been made earlier respectively: of silver paste (L-121, prod. by ITME) on polyester film and of silver paste (P-124, ITME) on glass substrates. Then, the graphene paste was printed, left for 10 minutes to stabilise and hardened in the temperature of 120°C for an hour. Layers printed on glass were additionally annealed in the temperature of 300°C and 400°C for an hour.

### Results

The developed pastes exhibit low viscosity but very good wettability of polymer and glass substrates. Some problems occurred regarding the dispersion of graphene nanoplatelets in the layer. A SEM photograph of a layer printed on a polyester substrate is presented on drawing 3.

In fig. 3 it can be noticed that after annealing in the temperature of 120°C, some platelets protrude above the surface of the layer. It was confirmed by observations of the profile layer which proved that the layer is about 1 µm thick and its roughness (Rₐ) also amounts to about 1 µm. The sheet resistivity of the layer on a polyester film and on a glass substrate was 21 kΩ/□ and 25 kΩ/□ respectively.

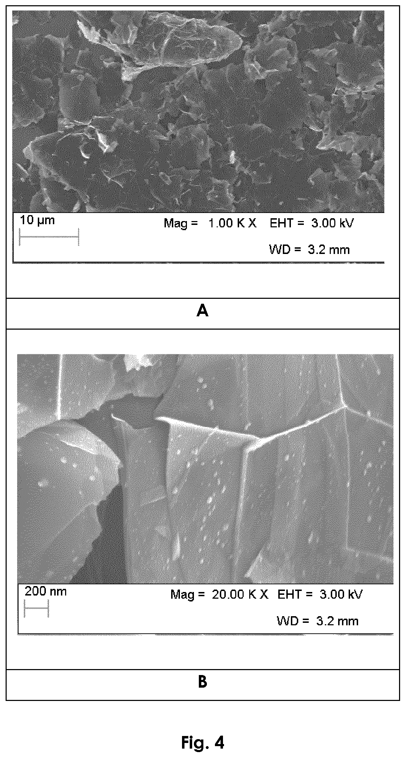

Then, the layers on the glass substrate were annealed in the temperature of 300°C and 400°C. The temperature selection was based on the results of the thermogravimetric test T_{g}, which proved that annealing of the vehicle for an hour in the temperature of 400°C cause weight loss of 99.94%. It means that a polymer annealed in this temperature is nearly entirely oxidised and removed whereas the remaining layer consists exclusively of graphene nanoplatelets. The microstructure of the layer so produced is presented in fig. 4.

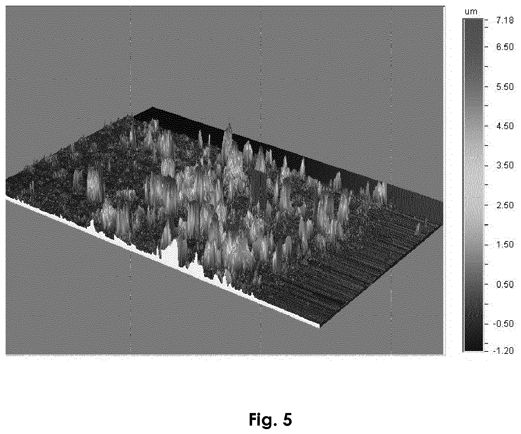

After annealing in higher temperatures, the thickness of the layer was significantly smaller. The average thickness of the layer measured by means of the Detak 150 profilometer by Veeco amounted to about 400 nm; the profile is presented on fig. 5. It shows agglomerated graphene nanoplatelets which protrude out of the layer. In the result of annealing, the thickness of the layer decreased by more than 100%.

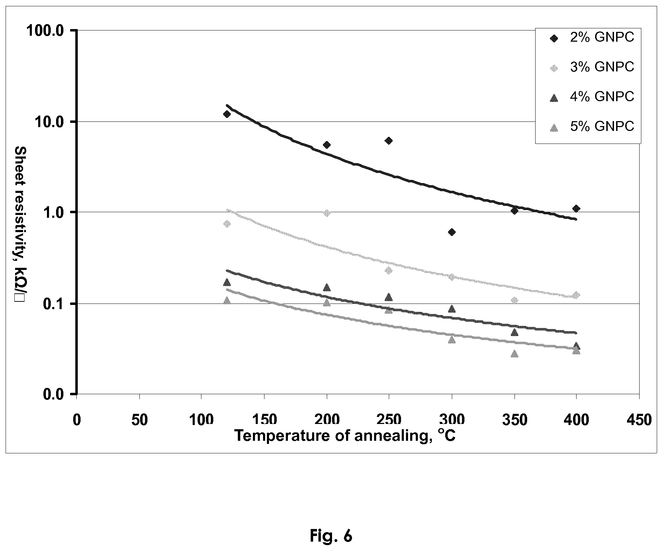

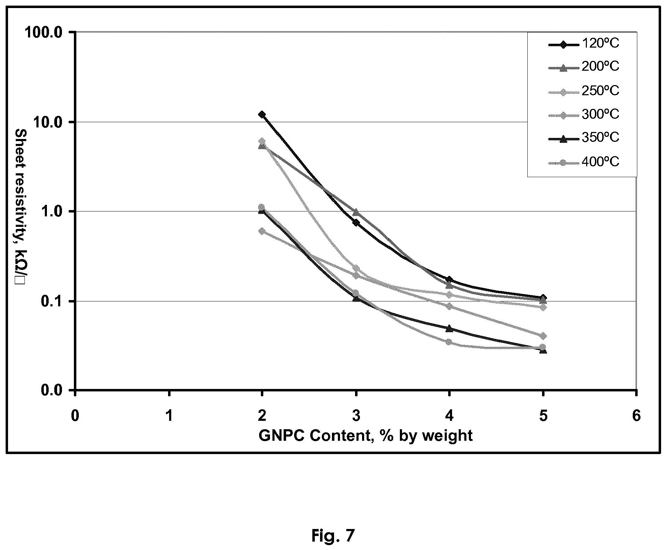

The sheet resistivity of the graphene layer decreased significantly as a result of annealing in higher temperatures. This dependence is presented in fig. 6 and 7. The graphene layer on the glass substrate after annealing in the temperature of 120°C had the sheet resistivity of 25 kΩ)/□, after annealing in the temperature of 300°C and 400°C it dropped down to 5 kΩ/□ and finally to 500 Ω/□ when the thickness was about 400 nm.

### Example 2

The sample preparation was the same as in example 1, the only difference being that the paste contained 4% of graphene by weight instead of 2% of graphene by weight. Such paste was applied on a glass substrate by the screen printing method as in example 1. After annealing (an oven-type furnace, temperature: 300°C, time to reach: 30 minutes, holdover time: 1 hour), conductive pathways with the sheet resistivity of about 86 Ω/□ were produced.

### Example 3

The sample preparation was the same as in example 1, the only difference being that the paste contained 5% of graphene by weight instead of 2% of graphene by weight. Such paste was applied on a glass substrate by the screen printing method as in example 1. After annealing (an oven-type furnace, temperature: 300°C, time to reach: 30 minutes, holdover time: 1 hour), conductive pathways with the sheet resistivity of about 40Ω/□ were produced.

### Example 4

The sample preparation was the same as in example 1, the only difference being that the paste contained 1% of graphene by weight instead of 2% of graphene by weight. Such paste was applied on a glass substrate by the screen printing method as in example 1. The printing process was repeated three times in order to increase the thickness of the layer. After annealing in a chamber dryer in the temperature of 120°C for 1 hour, conductive pathways featuring the sheet resistivity of about 9.5 kΩ/□ were produced.

### Example 5

The sample preparation was the same as in example 1, the only difference being that the paste contained 5% of graphene by weight instead of 2% of graphene by weight. Such paste was applied on a glass substrate by the screen printing method as in example 1. The printing process was repeated three times in order to increase the thickness of the layer. After annealing in a chamber dryer in the temperature of 120°C for 1 hour, conductive pathways featuring the sheet resistivity of about 16 Ω/□ were produced.

### Example 6

The sample preparation was the same as in example 1, the only difference being that the paste contained 5% of graphene by weight instead of 2% of graphene by weight. Such paste was applied on a glass substrate by the screen printing method as in example 1. The printing process was repeated three times in order to increase the thickness of the layer. After annealing (an oven-type furnace, temperature: 250°C, time to reach: 30 minutes, holdover time: 1 hour), conductive pathways with the sheet resistivity of about 11 Ω/□ were produced.

### Example 7

The sample preparation was the same as in example 1, the only difference being that the paste contained 3% of graphene by weight instead of 2% of graphene by weight. Such paste was applied on the KAPTON film substrate by the screen printing method as in example 1. After annealing (a chamber dryer, temperature: 120°C, holdover time: 1 hour), conductive pathways with the sheet resistivity of about 1.5kΩ/□ were produced. The layers preserved good adhesion to the substrate and were flexible.

### Example 8

The sample preparation was the same as in example 1, the only difference being that the paste contained 3% of graphene by weight instead of 2% of graphene by weight. Such paste was applied on the KAPTON film substrate by the screen printing method as in example 1. After annealing (an oven-type furnace, temperature: 250°C, time to reach: 30 minutes, holdover time: 1 hour), conductive pathways with the sheet resistivity of about 1 kΩ/□ were produced. The layers preserved good adhesion to the substrate and were flexible.

### Example 9

The sample preparation was the same as in example 1, the only difference being that the paste contained 3% of graphene by weight instead of 2% of graphene by weight and the PC vehicle was used instead of the PMMA vehicle. Such paste was applied on the KAPTON film substrate by the screen printing method as in example 1. After annealing (a chamber dryer, temperature: 120°C, holdover time: 1 hour), conductive pathways with the sheet resistivity of about 5 kΩ/□ were produced. The layers preserved good adhesion to the substrate and were flexible.

### Example 10

The sample preparation was the same as in example 1, the only difference being that the paste contained 3% of graphene by weight instead of 2% of graphene by weight and the PC vehicle was used instead of the PMMA vehicle. Such paste was applied on the KAPTON film substrate by the screen printing method as in example 1. After annealing (an oven-type furnace, temperature: 250°C, time to reach: 30 minutes, holdover time: 1 hour), conductive pathways with the sheet resistivity of about 2 kΩ/□ were produced. The layers preserved good adhesion to the substrate and were flexible.

### Example 11

The sample preparation was the same as in example 1, the only difference being that the paste contained 3% of graphene by weight instead of 2% of graphene by weight and the PC vehicle was used instead of the PMMA vehicle. Such paste was applied on the KAPTON film substrate by the screen printing method as in example 1. After annealing (an oven-type furnace, temperature: 300°C, time to reach: 30 minutes, holdover time: 1 hour), conductive pathways with the sheet resistivity of about 1 kΩ/□ were produced.

### Example 12

The sample preparation was the same as in example 1, the only difference being that the paste contained 15% of the GNPA graphene by weight instead of 2% of GNPC graphene by weight. Such paste was applied on a glass substrate by the screen printing method as in example 1. After annealing (a chamber dryer, temperature: 120°C, holdover time: 1 hour), conductive pathways with the sheet resistivity of about 650 Ω/□ were produced.

### Example 13

The sample preparation was the same as in example 1, the only difference being that the paste contained 15% of the GNPA graphene by weight instead of 2% of GNPC graphene by weight. Such paste was applied on a glass substrate by the screen printing method as in example 1. After annealing (an oven-type furnace, temperature: 300°C, time to reach: 30 minutes, holdover time: 1 hour), conductive pathways with the sheet resistivity of about 170 Ω/□ were produced.

### Conclusions:

The inventors presented first results of the research on the polymer paste based on graphene nanoplatelets, suitable for the screen printing technique. After curing in the temperature of 120°C, the sheet resistivity of the graphene layer is comparable to the resistance of layers comprising carbon nanotubes.

The layers comprising graphene nanoplatelets surpass the layers with carbon nanotubes because they can comprise only graphene and still show good adhesion to the substrate. It was found that after annealing in the temperature of 400°C, there are no remains of the polymer in the layer. The layer shows very good electric conductivity. The sheet resistivity of a layer with the thickness of about 400 nm was 500 Ω/□.

The discussed layers seem to offer promising possibilities for their use. However, further research on their various properties is required.

It is also recommended to undertake further research with the purpose to improve the dispersion of graphene nanoplatelets in the organic vehicle carrier and the rheology of graphene pastes.

## Claims

1. A method of producing graphene layers on a substrate, **characterised in that** it comprises the following steps:
a) applying a paste comprising from 0.5% by weight up to 15% by weight of graphene nanoplatelets mixed with an organic vehicle in the form of a polymethyl methacrylate (PMMA) solution in butyl carbitol acetate with the concentration from 2% by weight to 10% by weight or in the form of a polycarbonate (PC) solution in butyl carbitol acetate with the concentration from 5% by weight to 12% by weight on said substrate by the screen printing method,
b) annealing of the paste so applied on the substrate in the temperature from 100°C to 500°C.

2. The method according to claim 1, **characterised in that** the content of the nanoplatelets in said paste is 2% by weight to 8% by weight, more preferably from 5% by weight to 8% by weight.

3. The method according to claim 1 or 2, **characterised in that** said paste comprises an organic vehicle in the form of a polymethyl methacrylate (PMMA) solution in butyl carbitol acetate with the concentration from 5% by weight to 10% by weight, preferably about 8% by weight.

4. The method according to claim 1 or 2, **characterised in that** said paste comprises an organic vehicle in the form of a polycarbonate (PC) solution in butyl carbitol acetate with the concentration of about 10% by weight.

5. The method according to any of the above claims, **characterised in that** said paste comprises additives which improve dispersion, selected from a group comprising agents which reduce surface tension, facilitate de-agglomeration, prevent re-agglomeration and sedimentation of the filler and additives improving the rheology of the paste.

6. The method according to any of the above claims, **characterised in that** said annealing stage is carried out in the temperature of 120°C, 200°C, 250°C, 300°C, 350°C or 400°C.

7. The method according to any of the above claims, **characterised in that** said annealing stage is carried out for 15 to 90 minutes, more preferably for 30 to 90 minutes and most preferably for 45 to 60 minutes.

8. The method according to any of the above claims, **characterised in that** said substrate is selected from a group comprising: glass, ceramics, metals, plastics, low- and high-temperature polymer films, fabrics, paper.

9. A paste comprising graphene nanoplatelets and an organic vehicle , **characterised in that** it comprises:
a) from 0.5% by weight to 15% by weight, more preferably from 2% by weight to 8% by weight and most preferably from 5% by weight to 8% by weight of graphene nanoplatelets,
b) an organic vehicle in the form of a polymethyl methacrylate (PMMA) solution in butyl carbitol acetate with the concentration from 2% by weight to 10% by weight, more preferably from 5% by weight to 10% by weight and most preferably of about 8% by weight, or a vehicle in the form of a polycarbonate (PC) solution in butyl carbitol acetate with the concentration from 5% by weight to 12% by weight, preferably about 10% by weight.
c) or possibly additives which improve dispersion, selected from a group comprising agents which reduce surface tension, facilitate de-agglomeration, prevent re-agglomeration and sedimentation of the filler and additives improving the rheology of the paste.

## Patentansprüche

1. Verfahren zur Herstellung von Graphenschichten auf einem Substrat, **dadurch gekennzeichnet, dass** es die folgenden Schritte umfasst:
a) auftragen einer Paste, 0,5 Gew.-% bis zu 15 Gew.-% Graphennanoplättchen enthaltend, gemischt mit einem organischen Träger in Form einer Polymethylmethacrylatlösung (PMMA) in Butylcarbitolacetat mit der Konzentration von 2 Gew.-% bis 10 Gew.-% oder in Form einer Polycarbonatlösung (PC) in Butylcarbitolacetat mit der Konzentration von 5 Gew.-% bis 12 Gew.-% auf dem Substrat durch das Siebdruckverfahren,
b) tempern der so auf dem Substrat augetragenen Paste in der Temperatur von 100°C bis 500°C.

2. Verfahren nach Anspruch 1 **dadurch gekennzeichnet, dass** der Gehalt der Nanoplättchen in der genannten Paste 2 Gew.-% bis 8 Gew.-%, mehr bevorzugt 5 Gew.-% bis 8 Gew.-% beträgt.

3. Verfahren nach Anspruch 1 oder 2, **dadurch gekennzeichnet, dass** die Paste ein organisches Träger in Form einer Polymethylmethacrylatlösung (PMMA) in Butylcarbitolacetat mit einer Konzentration von 5 Gew.-% bis 10 Gew.-%, vorzugsweise etwa 8 Gew.-% umfasst.

4. Verfahren nach Anspruch 1 oder 2, **dadurch gekennzeichnet, dass** die Paste ein organisches Träger in Form einer Polycarbonatlösung (PC) in Butylcarbitolacetat mit einer Konzentration von etwa 10 Gew.-% umfasst.

5. Verfahren nach einem der vorstehenden Ansprüche, **dadurch gekennzeichnet, dass** die Paste Additive, die die Dispersion verbessern umfasst ausgewählt aus einer Gruppe, die Mittel die die Oberflächenspannung reduzieren, die Entagglomeration erleichtern, eine Reagglomeration und Sedimentation des Füllstoffs verhindern und Additive, die die Rheologie der Paste verbessern umfasst.

6. Verfahren nach einem der vorhergehenden Ansprüche, **dadurch gekennzeichnet, dass** der Tempernschritt bei einer Temperatur von 120°C, 200°C, 250°C, 300°C, 350°C oder 400°C durchgeführt wird.

7. Verfahren nach einem der vorhergehenden Ansprüche, **dadurch gekennzeichnet, dass** die Tempernschritte für 15 bis 90 Minuten, mehr bevorzugt für 30 bis 90 Minuten und am meisten bevorzugt für 45 bis 60 Minuten durchgeführt werden.

8. Verfahren nach einem der vorhergehenden Ansprüche, **dadurch gekennzeichnet, dass** das Substrat aus einer Gruppe umfassend: Glas, Keramik, Metalle, Kunststoffe, niedrig- und hochtemperatur Polymerfilme, Gewebe, Papier ausgewählt ist.

9. Paste, umfassend Graphennanoplättchen und ein organisches Träger, **dadurch gekennzeichnet, dass** es:
a) von 0,5 Gew.-% bis 15 Gew.-%, mehrbevorzugt von 2 Gew.-% bis 8 Gew.-% und am meisten bevorzugt von 5 Gew.-% bis 8 Gew.-% Graphennanoplättchen,
b) ein organisches Träger in Form einer Polymethylmethacrylatlösung (PMMA) in Butylcarbitolacetat mit einer Konzentration von 2 Gew.-% bis 10 Gew.-%, mehr bevorzugt von 5 Gew.-% bis 10 Gew.-% und am meisten bevorzugt von etwa 8 Gew.-% oder ein Träger in Form einer Polycarbonatlösung (PC) in Butylcarbitolacetat mit einer Konzentration von 5 Gew.-% bis 12 Gew.-%, vorzugsweise etwa 10 Gew.-%.,
c) oder gegebenenfalls Additive, die die Dispersion verbessern, ausgewählt aus einer Gruppe von Mitteln, die die Oberflächenspannung verringern, die Entagglomeration erleichtern, eine Reagglomeration und eine Sedimentation des Füllstoffs verhindern, und Additive, die die Rheologie der Paste verbessern, umfasst.

## Revendications

1. Un procédé de production de couches de graphène sur un substrat, **caractérisé en ce qu'**il comprend
les étapes suivantes :
a) application d'une pâte comprenant de 0,5% en poids jusqu'à 15% en poids de nanoplaquettes de graphène mélangées avec un transporteur organique sous la forme d'une solution de méthacrylate de polyméthyle (PMMA) dans l'acétate de butylcarbitol avec une concentration de 2% en poids à 10% en poids ou sous la forme d'une solution de polycarbonate (PC) dans l'acétate de butylcarbitol avec une concentration de 5% en poids à 12% en poids sur ledit substrat par le procédé d'impression sérigraphique,
b) recuit de la pâte ainsi appliquée sur le substrat à la température de 100°C à 500°C.

2. Le procédé selon la revendication 1, **caractérisé en ce que** la teneur en nanoplaquettes dans ladite pâte est de 2% en poids à 8% en poids, plus préférablement de 5% en poids à 8% en poids.

3. Le procédé selon la revendication 1 ou 2, **caractérisé en ce que** ladite pâte comprend un transporteur organique sous la forme d'une solution de méthacrylate de polyméthyle (PMMA) dans l'acétate de butylcarbitol avec une concentration de 5% en poids à 10% en poids, de préférence d'environ 8% en poids.

4. Le procédé selon la revendication 1 ou 2, **caractérisé en ce que** ladite pâte comprend un transporteur organique sous la forme d'une solution de polycarbonate (PC) dans l'acétate de butylcarbitol avec une concentration d'environ 10% en poids.

5. Le procédé selon l'une quelconque des revendications précédentes, **caractérisé en ce que** ladite pâte comprend des additifs qui améliorent la dispersion, choisis parmi un groupe comprenant des agents qui réduisent la tension superficielle, facilitent la désagglomération, empêchent la re-agglomération et la sédimentation de la charge et des additifs améliorant la rhéologie de la pâte.

6. Le procédé selon l'une quelconque des revendications précédentes, **caractérisé en ce que** ladite étape de recuit est effectuée à la température de 120°C, 200°C, 250°C, 300°C, 350°C ou 400°C.

7. Le procédé selon l'une quelconque des revendications précédentes, **caractérisé en ce que** ladite étape de recuit est effectuée pendant 15 à 90 minutes, plus préférablement pendant 30 à 90 minutes et le plus préférablement pendant 45 à 60 minutes.

8. Le procédé selon l'une quelconque des revendications précédentes, **caractérisé en ce que** ledit substrat est choisi dans un groupe comprenant : verre, céramique, métaux, plastiques, films polymères à basse et haute température, tissus, papier.

9. Une pâte comprenant nanoplaquettes de graphène et un transporteur organique, **caractérisée en ce qu'**elle comprend :
a) de 0,5% en poids à 15% en poids, plus préférablement de 2% en poids à 8% en poids, et le plus préférablement de 5% en poids à 8% en poids de nanoplaquettes de graphène,
b) un véhicule organique sous la forme d'une solution de méthacrylate de polyméthyle (PMMA) dans l'acétate de butylcarbitol avec une concentration de 2% en poids à 10% en poids, plus préférentiellement de 5% en poids à 10% en poids et le plus préférablement d'environ 8% en poids, ou un transporteur sous la forme d'une solution de polycarbonate (PC) dans l'acétate de butylcarbitol avec une concentration de 5% en poids à 12% en poids, de préférence d'environ 10% en poids,
c) ou éventuellement des additifs améliorant la dispersion, choisis parmi un groupe comprenant des agents qui réduisent la tension superficielle, facilitent la désagglomération, empêchent la re-agglomération et la sédimentation de la charge et des additifs améliorant la rhéologie de la pâte.
